# EUROPÄISCHE PATENTANMELDUNG

(11) **EP 1 083 067 A2**
(43) Veröffentlichungstag der Anmeldung: **14.03.2001**
(21) Anmeldenummer: 00118202.1
(22) Anmeldetag: 31.08.2000
(51) Int. Cl.: B60H 1/00

(54) **Anordnung von Bedienelementen einer Heiz- und/oder Kühlvorrichtung eines Kraftfahrzeugs an einer Mittelkonsole**

(30) Priorität: 08.09.1999 DE 19942887
(71) Anmelder: Volkswagen Aktiengesellschaft, 38436 Wolfsburg (DE)
(72) Erfinder: Hofmann, Gustav, 38114 Braunschweig (DE); Soltendieck, Bernd, 38108 Braunschweig (DE); Jauch-Paganetti, Michele, 38106 Braunschweig (DE)

(57) **Zusammenfassung**

Die Erfindung betrifft eine Anordnung (10) von Bedienelementen einer Heiz- und/oder Kühlvorrichtung eines Kraftfahrzeugs an einer Mittelkonsole (1) wobei wenigstens ein Teil der Bedienelemente als Drehsteller (11, 12, 13) ausgebildet sind. Erfindungsgemäß ist ein erster Drehsteller (11) für die Einstellung der Heiz-/Kühltemperatur der Heiz-/Kühlluft und ein zweiter Drehsteller (12) für die Einstellung der Beschickung unterschiedlicher Austrittsdüsen mit Heiz-/Kühlluft vorgesehen. Weiter ist ein dritter, gegenüber dem ersten und zweiten Drehsteller (11, 12) kleinerer Drehsteller (13) für die Einstellung einer Gebläsedrehzahl vorgesehen, wobei der erste, zweite und dritte Drehsteller (11, 12, 13) in einem Bedienblock (14) nebeneinander an der Mittelkonsole (1) angeordnet sind. Mit einer derartigen Anordnung der Drehsteller (11, 12, 13) wird eine Gebläseeinstellung oder eine Änderung der Einstellung in Verbindung mit einer Gebläsedrehzahländerung sofort und ohne Zeitverzögerung direkt wahrnehmbar, so daß eine individuell gewünschte Einstellung unmittelbar über das Wahrnehmungsgefühl gefunden werden kann, wobei auch eine geeignete Feineinstellung sofort auffindbar ist.

## Beschreibung

Die Erfindung betrifft eine Anordnung von Bedienelementen einer Heiz- und/oder Kühlvorrichtung eines Kraftfahrzeugs an einer Mittelkonsole nach dem Oberbegriff des Anspruchs 1.

Als Bedienelemente für eine Heiz- und/oder Kühlvorrichtung eines Kraftfahrzeugs sind eine Vielzahl von Ausführungsformen, insbesondere Stellschieber, Drehsteller und Rändelräder bekannt, die im Griffbereich eines Fahrzeugbenutzers angeordnet sind. Dazu ist unter anderem die Anordnung an einer Mittelkonsole allgemein bekannt.

Allgemein bekannt ist auch die Anordnung und Verwendung mehrerer Bedienelemente für eine individuelle Einstellung:

Ein erstes Bedienelement ist dabei für die Einstellung der Heiz- und/oder Kühltemperatur vorgesehen, womit je nach Ausführung der Heiz- und/oder Kühlvorrichtung die Zumischung von Frischluft und die Zuschaltung von Heiz- und/oder Kühlanlagenteilen direkt eingestellt wird oder eine Sollwertvorgabe für eine Temperaturregelung erfolgt.

Weiter ist ein zweites Bedienelement für die Einstellung der Beschickung unterschiedlicher Austrittdüsen mit Heiz-/Kühlluft vorgesehen. Mit diesem Bedienelement kann die Heiz-/Kühlluft mehr in den Fahrzeugbodenbereich, in eine mittlere Höhe oder für eine Scheibenabtauung nach oben in den Scheibenbereich gelenkt werden.

Ein weiteres drittes Bedienelement dient zur kontinuierlichen oder stufenweisen Einstellung der Drehzahl eines Gebläses.

Zudem sind weitere Bedienelemente als Schalter und Taster für eine Heiz- und/oder Kühlvorrichtung bekannt, die beispielsweise für die Einschaltung eines Kühlaggregats oder die Schaltung eines Umluftbetriebs verwendet werden.

Regelmäßig werden in Fahrzeugen unterschiedliche Bedienelementarten, insbesondere Stellschieber und Drehsteller kombiniert, die teilweise relativ weit auseinanderliegen und insgesamt viel Platz beanspruchen. Wenn dagegen wenig Einbauraum vorhanden ist, werden die Bedienelemente sehr klein ausgebildet, wodurch die Ablesbarkeit und eine gewünschte Feineinstellung nur bedingt gegeben sind. Eine gut definierte Taststruktur für eine 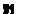 Blindbedienung" bei Dunkelheit und/oder ohne den Blick von der Fahrbahn abwenden zu müssen liegt meist nicht vor oder ist zumindest schwierig einprägbar.

Aufgabe der Erfindung ist es, eine Anordnung von Bedienelementen einer Heiz- und/oder Kühlvorrichtung eines Kraftfahrzeugs an einer Mittelkonsole zu schaffen, die bei geringem Platzbedarf und guter Funktion einen hohen Bedienkomfort aufweist.

Diese Aufgabe wird mit den Merkmalen des Anspruchs 1 gelöst. Gemäß Anspruch 1 sind ein erster Drehsteller für die Einstellung der Heiz- und/oder Kühltemperatur der Heiz-/Kühlluft und ein zweiter Drehsteller für die Einstellung der Beschickung unterschiedlicher Austrittdüsen mit Heiz-/Kühlluft vorgesehen. Ein dritter, gegenüber dem ersten und zweiten Drehsteller kleinerer Drehsteller ist für die Einstellung der Gebläsedrehzahl eingesetzt. Der erste, zweite und dritte Drehsteller sind in einem Bedienblock nebeneinander an der Mittelkonsole angeordnet.

Dieser Anordnung und Größendimensionierung der Drehsteller liegen folgende Überlegungen zugrunde: eine Gebläseeinstellung oder eine Änderung der Einstellung in Verbindung mit einer Gebläsedrehzahländerung wird sofort und ohne Zeitverzögerung direkt wahrnehmbar. Einerseits wird die aus den Austrittsdüsen ausgestrahlte Luftmenge direkt gefühlt und andererseits wird insbesondere bei höheren Gebläsedrehzahleinstellungen ein verstärktes Gebläsegeräusch wahrgenommen. Damit kann eine individuell gewünschte Einstellung unmittelbar über das Wahrnehmungsgefühl gefunden werden, wobei auch eine geeignete Feineinstellung sofort auffindbar ist. Damit ist auch eine 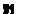 Blindbedienung" einfach möglich, da hier nicht vorzugsweise nach einer Skalenstellung auf Sicht eingestellt werden muß. Dies führt erfindungsgemäß dazu, daß dieser dritte Drehsteller für die Einstellung der Gebläsedrehzahl relativ klein dimensioniert sein kann.

Anders treten die Wirkungen einer Einstellung oder Einstellungsveränderung am ersten und zweiten Drehsteller für die Heiz-/Kühltemperatur und die Beschickung unterschiedlicher Austrittdüsen zeitlich so verzögert auf, daß eine genaue Einstellung nach dem Anstrahlgefühl und dem Temperaturempfinden praktisch nicht oder nur über unvertretbar lange Zeitabstände mit mehrfachen Nachregulierungen möglich ist. Daher ist erfindungsgemäß für den ersten und zweiten Drehsteller eine relativ große Dimensionierung vorgesehen, die eine gute Ablesbarkeit auf Sicht in Verbindung mit einer genauen sofortigen Feineinstellung ermöglicht. Die Wirkung der Einstellung erfolgt dann in bekannter und erwarteter Weise zeitverzögert.

Der erste, zweite und dritte Drehsteller sind in einem Bedienblock nebeneinander an der Mittelkonsole in einem günstigen Griffbereich angeordnet. Der erste und zweite Drehsteller sind mit ausreichender Größe für eine genaue Feineinstellung und gute Ablesbarkeit zu dimensionieren, wogegen der dritte Drehsteller für das Gebläse ohne Einbußen an Funktionsfähigkeit und Bedienkomfort bewußt kleiner gewählt ist. Dadurch ergibt sich insgesamt eine kompakte Blockkontur. Durch die unterschiedlichen Größen der Drehsteller, wobei vorzugsweise der erste und zweite Drehsteller gleich groß ausgebildet sind und der dritte Drehsteller dazwischen angeordnet ist, ergibt sich eine gut definierte Taststruktur für eine Blindbedienung zur Auffindung der einzelnen Drehsteller.

In einer besonders bevorzugten Ausführungsform weisen die Drehsteller in der Draufsicht eine Kreisfläche mit einem im Durchmesser der Kreisfläche verlaufenden, erhabenen Steg als Drehknauf auf und sind um eine etwa in Fahrzeuglängsrichtung verlaufende Achse drehbar. Dadurch ist die jeweilige Einstellung einfach abzulesen und es ist eine genau definierte Taststruktur vorgegeben, wobei die ertastbare Richtungsstellung des Stegs bzw. Drehknaufs die Einstellung des Drehstellers gegenüber einer ortsfesten Kreisskala wiedergibt. Zudem kann ein solcher Drehknauf für eine bequeme Bedienung gut ergriffen werden.

Vorteilhaft wird dabei jeweils für eine mittlere und angenehme Einstellung der Heiz-/Kühlfunktion eine vertikale Drehknaufausrichtung vorgesehen. Damit können sowohl mit einem kurzen Blick als auch mit einer kurzen Tastbewegung Abweichungen der Drehstellereinstellung von einer solchen mittleren Grundeinstellung einfach und schnell erkannt werden.

Die drei Drehsteller werden vorteilhaft aneinander angrenzend angeordnet, wodurch ein kompakter Aufbau weiter gefördert wird. Insbesondere kann dabei der kleinere, kreisrunde Drehsteller mit gleicher Oberkante zwischen dem ersten und zweiten kreisrunden Drehsteller liegen, so daß die Quererstreckung eines solchen Blocks geringer als die Summe der drei Durchmesser ist. Bei einer solchen Anordnung ergibt sich zwischen dem ersten und zweiten Drehsteller im Bereich unter dem dritten Drehsteller ein gut geeigneter Platz für weitere Bedienelemente der Heiz-/Kühlvorrichtung in der Art von Tastern oder Schaltern. Vorteilhaft ist bei einer solchen Anordnung wiederum eine gut definierte und gut einprägsame Taststruktur gegeben, wobei die Anordnung bei einer Blindbedienung auf die Taster oder Schalter hinführt.

Vorzugsweise sind dabei zwei Taster horizontal nebeneinander angeordnet. Ein Taster kann dabei für die Einschaltung des Umluftbetriebs und ein Taster für die Zuschaltung eines Kühlaggregats verwendet werden.

Eine solche kompakte Blockeinheit mit klarem und ansprechenden Design eignet sich besonders für den Einbau etwa in Kniehöhe an einem Mittelkonsolenblock, wobei die unteren Konturen der ersten und zweiten Drehsteller sowie die unteren Konturen der Taster die in den Fahrzeuginnenraum vorspringende Unterkante eines solchen Mittelkonsolenblocks bilden. Über diesem kompakten Bedienblock für die Heiz-/Kühlvorrichtung steht ein großer Raum für die Anbringung zusätzlicher Bedien- und Funktionselemente zur Verfügung.

Bei der vorstehend genannten Anordnung wird zudem vorgeschlagen, zur Vergrößerung der Beinfreiheit die Seitenbereiche des Mittelkonsolenblocks schräg nach unten einzuziehen. Der Schrägverlauf soll dabei der jeweils seitlichen äußeren und unteren Kreiskontur des seitlich außen liegenden ersten und zweiten Drehstellers angepaßt sein.

Anhand einer Zeichnung wird die Erfindung näher erläutert.

Es zeigen:
- Fig. 1: eine schematische, perspektivische Draufsicht auf eine Mittelkonsole eines Kraftfahrzeugs, und
- Fig. 2: eine schematische Darstellung einer Anordnung von Bedienelementen an der in der Fig. 1 dargestellten Mittelkonsole.

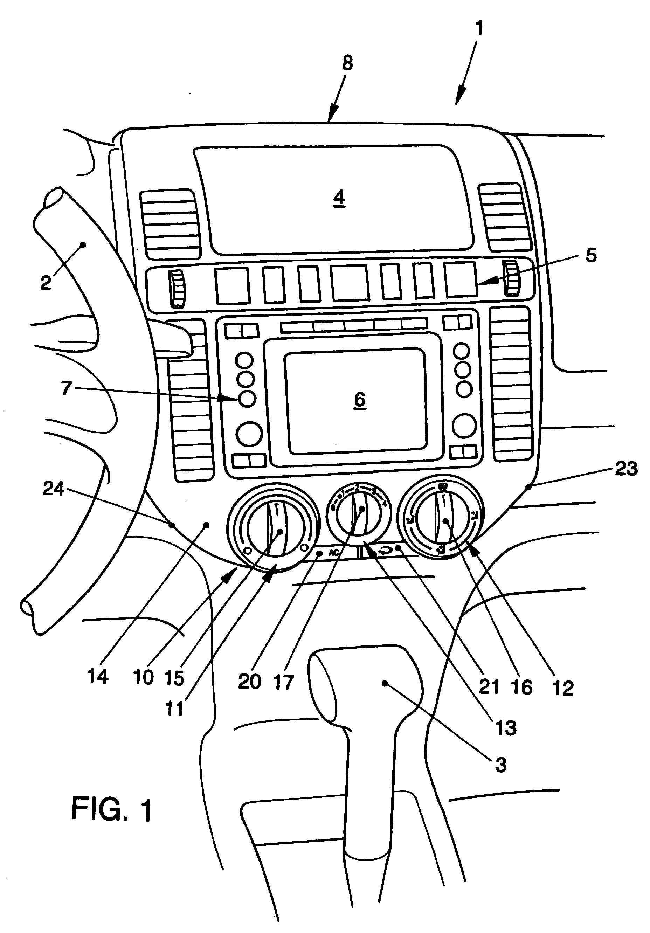

In der Fig. 1 ist eine schematische, perspektivische Draufsicht auf einen Mittelkonsolenblock 8 einer Mittelkonsole 1 eines Kraftfahrzeugs dargestellt. Dieser Mittelkonsolenblock 8 ist im Bereich rechts neben einem Lenkrad 2 und oberhalb eines Schalthebels 3 angeordnet und umfaßt, wie dies in der Fig. 1 lediglich schematisch angedeutet ist, eine über eine Schalteinheit 5 bedienbare Audioeinheit 4 sowie eine ebenfalls über eine Schalteinheit 7 bedienbare Displayeinheit 6 für ein Navigationssystem.

Im Bereich unterhalb der Displayeinheit 6 ist eine Anordnung 10 von Bedienelementen an einem Bedienblock 14 ausgebildet. An diesem Bedienblock 14 sind ein erster Drehsteller 11 für die Einstellung der Heiz-/Kühltemperatur der Heiz-/Kühlluft, ein zweiter Drehsteller 12 für die Einstellung der Beschickung unterschiedlicher Austrittsdüsen mit Heiz-/Kühlluft sowie ein dritter Drehsteller 13 für die Einstellung einer Gebläsedrehzahl angeordnet.

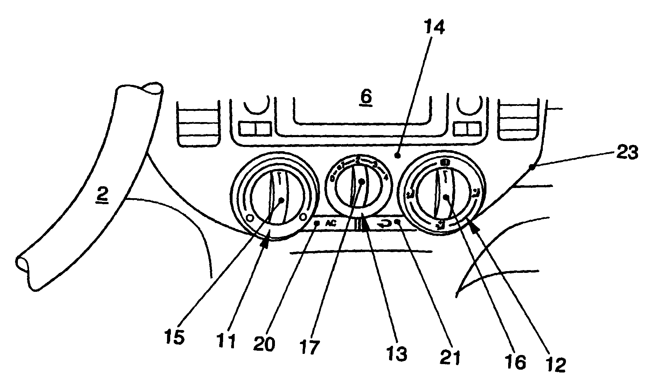

Wie dies aus den Fig. 1 und 2 ersichtlich ist, sind der erste Drehsteller 11 und der zweite Drehsteller 12 jeweils gleich groß ausgebildet. Der dritte Drehsteller 13 ist dagegen gegenüber dem ersten und zweiten Drehsteller 11, 12 kleiner sowie angrenzend zwischen diesen angeordnet.

Die Drehsteller 11, 12 und 13 weisen jeweils in der Draufsicht eine Kreisfläche mit einem im Durchmesser der Kreisfläche verlaufenden, erhabenen Steg als Drehknauf 15, 16 und 17 auf und sind um eine etwa in Fahrzeuglängsrichtung verlaufende Achse drehbar. Die Richtungsstellung der Drehknäufe 15, 16 und 17 gibt die Einstellung des jeweiligen Drehstellers 11, 12 und 13 gegenüber einer ortsfesten Kreisskala wieder, wobei für eine mittlere und angenehme Einstellung der Heiz-/Kühlfunktion eine vertikale Ausrichtung der Drehknäufe 15, 16 und 17 der Drehsteller 11, 12 und 13 vorgesehen ist, wie dies in den Fig. 1 und 2 dargestellt ist. Abweichungen der Drehstellereinstellung von dieser mittleren Grundstellung können vom Bediener sowohl mit einem kurzen Blick als auch durch Tasten einfach und schnell erkannt werden.

Der dritte, kleinere Drehsteller 13 ist zwischen dem ersten und zweiten, jeweils größeren Drehsteller 11, 12 mit gleicher Oberkantenausrichtung angeordnet. Im Bereich zwischen dem ersten und zweiten Drehsteller 11, 12 sind unterhalb des dritten Drehstellers 13 am Bedienblock 14 ein Taster 20 für die Einschaltung des Umluftbetriebs und ein Taster 21 für die Zuschaltung eines Kühlaggregats angeordnet.

Für ein ansprechendes Design bilden die unteren Konturen des ersten und zweiten Drehstellers 11, 12 sowie die unteren Konturen der Taster 20, 21 die Unterkante des etwa in Kniehöhe in den Fahrzeuginnenraum vorspringenden Mittelkonsolenblocks 8. Dabei sind jeweils die Seitenbereiche 22, 23 des Mittelkonsolenblocks 8 schräg nach unten eingezogen, so daß der Schrägverlauf jeweils der seitlich äußeren und unteren Kreiskontur des ersten und zweiten Drehstellers 11, 12 angepaßt ist.

Mit einer derartigen Anordnung 10 der ersten, zweiten und dritten Drehsteller 11, 12 und 13 ist eine Gebläseeinstellung oder eine Änderung der Einstellung in Verbindung mit einer Gebläsedrehzahländerung sofort und ohne Zeitverzögerung direkt wahrnehmbar. Einerseits wird dadurch die aus den Austrittsdüsen ausgestrahlte Luftmenge direkt gefühlt und andererseits, insbesondere bei höheren Gebläsedrehzahleinstellungen ein verstärktes Gebläsegeräusch wahrgenommen. Eine individuell gewünschte Einstellung kann somit unmittelbar über das Wahmehmungsgefühl des Benutzers gefunden werden, wobei insbesondere auch im Rahmen einer 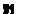 Blindbedienung" eine geeignete Feineinstellung sofort auffindbar ist, ohne der Notwendigkeit einer auf Sicht eingestellten Skalenstellung.

## Patentansprüche

1. Anordnung von Bedienelementen einer Heiz- und/oder Kühlvorrichtung eines Kraftfahrzeugs an einer Mittelkonsole, wobei wenigstens ein Teil der Bedienelemente als Drehsteller ausgebildet sind,
dadurch gekennzeichnet, daß
ein erster Drehsteller (11) für die Einstellung der Heiz-/Kühltemperatur der Heiz-/Kühlluft und ein zweiter Drehsteller (12) für die Einstellung der Beschickung unterschiedlicher Austrittdüsen mit Heiz-/Kühlluft vorgesehen ist,
ein dritter, gegenüber dem ersten und zweiten Drehsteller (11, 12) kleinerer Drehsteller (13) für die Einstellung einer Gebläsedrehzahl vorgesehen ist, und
der erste, zweite und dritte Drehsteller (11, 12, 13) in einem Bedienblock (14) nebeneinander an der Mittelkonsole (1) angeordnet sind.

2. Anordnung von Bedienelementen nach Anspruch 1,
dadurch gekennzeichnet, daß
die Drehsteller (11, 12, 13) in der Draufsicht eine Kreisfläche mit einem im Durchmesser der Kreisfläche verlaufenden, erhabenen Steg als Drehknauf (15, 16, 17) aufweisen und um eine etwa in Fahrzeuglängsrichtung verlaufende Achse drehbar sind.

3. Anordnung von Bedienelementen nach Anspruch 2,
dadurch gekennzeichnet, daß
für eine mittlere Einstellung der Heiz-/Kühlfunktion jeweils eine vertikale Drehknaufausrichtung vorgesehen ist.

4. Anordnung von Bedienelementen nach einem der Ansprüche 1 bis 3,
dadurch gekennzeichnet, daß
der dritte Drehsteller (13) angrenzend zwischen dem ersten und zweiten Drehsteller (11, 12) angeordnet ist, wobei vorzugsweise der erste Drehsteller (11) links zur Fahrerseite hin liegt.

5. Anordnung von Bedienelementen nach einem der Ansprüche 1 bis 4,
dadurch gekennzeichnet, daß
im Bedienblock (14) zudem wenigstens ein Taster, vorzugsweise zwei Taster (20, 21) für weitere Bedienfunktionen der Heiz- und Kühlvorrichtung angeordnet sind.

6. Anordnung von Bedienelementen nach Anspruch 5,
dadurch gekennzeichnet, daß
der dritte kleinere Drehsteller (13) zwischen dem ersten und zweiten jeweils größeren, vorzugsweise gleich großen Drehsteller (11, 12) mit gleicher Oberkantenausrichtung angeordnet ist, und
im Bereich zwischen dem ersten und zweiten Drehsteller (11, 12) unter dem dritten Drehsteller (13) wenigstens ein, vorzugsweise zwei Taster (20, 21) in einer horizontalen Reihe angeordnet sind.

7. Anordnung von Bedienelementen nach Anspruch 6,
dadurch gekennzeichnet, daß
die unteren Konturen der ersten und zweiten Drehsteller (11, 12) sowie der Taster (20, 21) die Unterkante eines etwa in Kniehöhe in den Innenraum vorspringenden Mittelkonsolenblocks (8) bilden.

8. Anordnung von Bedienelementen nach Anspruch 7,
dadurch gekennzeichnet, daß
jeweils die Seitenbereiche (22, 23) des Mittelkonsolenblocks (8) nach unten schräg eingezogen sind, wobei der Schrägverlauf jeweils der seitlich äußeren und unteren Kreiskontur des ersten und zweiten Drehstellers (11, 12) angepaßt ist.
